**Europäisches Patentamt**

**European Patent Office**

**Office européen des brevets**

(19)

(11) Veröffentlichungsnummer: **0 283 861 B1**

## EUROPÄISCHE PATENTSCHRIFT

(12)

(45) Veröffentlichungstag der Patentschrift: **07.10.92**

(21) Anmeldenummer: **88103766.7**

(22) Anmeldetag: **10.03.88**

(51) Int. Cl.5: **B32B 27/28**, B32B 27/30, B32B 27/36, B32B 27/00

(54) **Verklebbare Dekorfolie aus Polycarbonat-Kunststoff.**

(30) Priorität: **20.03.87 DE 3709229**

(43) Veröffentlichungstag der Anmeldung: **28.09.88 Patentblatt 88/39**

(45) Bekanntmachung des Hinweises auf die Patenterteilung: **07.10.92 Patentblatt 92/41**

(84) Benannte Vertragsstaaten: **AT CH DE FR GB IT LI SE**

(56) Entgegenhaltungen:
DE-A- 3 244 355
GB-A- 2 120 169
US-A- 4 477 521

(73) Patentinhaber: **Röhm GmbH**
**Kirschenallee Postfach 4242**
**W-6100 Darmstadt 1(DE)**

(72) Erfinder: **Geppert, Barbara**
**Schönbergstrasse 75**
**W-6200 Wiesbaden(DE)**
Erfinder: **Hanstein, Friedrich**
**Darmstädter Strasse 66**
**W-6112 Gross-Zimmern(DE)**

EP 0 283 861 B1

## Beschreibung

Die Erfindung betrifft eine verklebbare Dekorfolie auf Basis eines Polycarbonat-oder schlagzähen PMMA-Kunststoffs und Verfahren zu ihrer Herstellung. Unter einer Dekorfolie wird hier eine einfarbige oder gemusterte Folie verstanden, deren Farbe oder Musterung nicht die gesamte Schichtdicke der Folie gleichmäßig durchsetzt. Die Musterung kann sich von einem farblich abweichenden Hintergrund, der von einem in einer Schicht der Folie gleichmäßig verteilten Pigment gebildet wird, abheben. Die Musterung kann ein- oder mehrfarbig sein und wahlweise aus ornamentalen oder figürlichen Mustern, Symbolen oder Schriftzeichen bestehen.

## Stand der Technik

Dekorfolien finden in großem Umfang Verwendung zur dekorativen Veredelung von tafelförmigen Werkstoffen, wie Spanplatten, Sperrholz, Kunststofftafeln, Verbundplatten aus Fasern und Kunststoffen, oder von Formteilen, wie Möbeln, Skiern, Surfbrettern u. dergl. Während Dekorfolien aus kunststoffgetränktem Papier oder Polyvinylchlorid sehr gebräuchlich sind, haben Dekorfolien aus Polycarbonat-Kunststoffen keine weite Verbreitung gefunden, obwohl sie sich durch hohen Glanz, Abriebfestigkeit und Zähigkeit hervorragend für diesen Zweck eignen wurden. Es hat sich jedoch als schwierig erwiesen, Folien aus Polycarbonat-Kunststoffen dauerhaft mit dem zu veredelnden Untergrund zu verkleben. Das gleiche trifft für schlagzähe Polymethylmethacrylat (PMMA)-Kunststoffe zu. Folien aus derartigen Kunststoffen werden nachfolgend als PMMA-Folien bezeichnet.

Die hohe Transparenz von Polycarbonat- und PMMA-Folien läßt es grundsätzlich zu, das Dekor an der Unterseite der Folie anzubringen, so daß es nach dem Aufkaschieren durch die transparente Folienschicht hindurch sichtbar, aber gegen Abrieb oder sonstige Beschädigungen geschützt ist. Die üblicherweise im Siebdruck aufgebrachte Dekor-Farbschicht erschwert die Verklebung der Folie zusätzlich.

## Aufgabe und Lösung

Der Erfindung liegt die Aufgabe zugrunde, eine Dekorfolie auf Basis von Polycarbonat- oder schlagzähem PMMA-Kunststoff zu schaffen, die sich auch dann einwandfrei und dauerhaft verkleben läßt, wenn das farbige Dekor an der Unterseite angebracht ist.

Die Aufgabe wurde durch eine Verbundfolie aus einem Polycarbonat-oder einem Gemisch aus Polycarbonat-Kunststoff und einem anderen, damit verträglichen Kunststoff oder einem schlagzähen PMMA-Kunststoff und einem ABS-Kunststoff gelöst. Es hat sich gezeigt, daß sich die beiden Kunststoffe auf einfache Weise durch thermische Verfahren unlösbar miteinander verbinden lassen und daß sich die Schicht aus ABS-Kunststoff leicht mit anderen Werkstoffen verkleben läßt. Um die Haftung der einzelnen Schichten untereinander und die Haftung an dem zu veredelnden Substrat nicht zu beeinträchtigen, wird das Dekor erfindungsgemäß aus einem in den Kunststoff eindiffundierten Farbstoff gebildet. Unbeschadet davon kann die Schicht des ABS-Kunststoffes ein gleichmäßig verteiltes Farbpigment als Hintergrund des Dekors enthalten.

Gegenstand der Erfindung sind daher die Dekorfolie und Verfahren zu ihrer Herstellung gemäß den Patentansprüchen.

## Ausführung der Erfindung

Unter Polycarbonat-Kunststoffen werden thermoplastische, extrudierbare Polyester der Kohlensäure mit aromatischen Bisphenolen, wie Bisphenol A, verstanden. Sie können allein oder im Gemisch mit anderen, damit verträglichen Kunststoffen die Schicht a der Dekorfolie bilden. Beispiele solcher verträglicher Kunststoffe sind bestimmte Polyester (Kodar 5445, Eastman Chemical). Sie können in dem Gemisch in Anteilen bis zu 90 Gew.-%, vorzugsweise bis zu 50 Gew.-% vorliegen. Verträglichkeit ist gegeben, wenn die Mischung in Form einer Folie klar oder nahezu klar durchsichtig ist. Vorzugsweise enthält die Schicht a wenigstens 30 Gew.-% Polycarbonat-Kunststoff.

Die Polycarbonat-Schicht a ist in diesem Sinne klar und vorzugsweise farblos, jedoch kann sie wahlweise auch transparent gefärbt sein. Ihre Oberfläche ist vorzugsweise hochglänzend, kann aber auch mattiert oder in anderer Weise strukturiert sein.

Schlagzähe PMMA-Kunsttoffe bestehen aus einer kontinuierlichen Phase aus thermoplastischem PMMA und etwa 5 bis 50 Gew.-% (bez. Gesamtgewicht) einer feinverteilten Zähphase aus vernetztem Polyalkylacrylat. Die Herstellung derartiger Kunststoffe ist z.B. in EP 113 924 beschrieben.

Die andere Schicht b der Dekorfolie besteht aus einem ABS-Kunststoff. Dabei handelt es sich um eine seit langem bekannte und angewandte Klasse von schlagzähen Kunststoffen auf der Basis von Mischpolymerisaten aus Acrylnitril, Butadien und Styrol; vgl. DIN 7728, B1.1 (Dez.1973); Römpps Chemie-Lexikon, 8.Aufl.(1979), S.25, 56.

Befindet sich das Dekor an der freiliegenden Unterseite der Schicht b, so muß diese Schicht klar durchsichtig sein, damit das Dekor nach dem Kaschieren auf ein Substrat durch die ganze Dekorfolie hindurch sichtbar ist. Befindet sich das Dekor dagegen an der Grenzfläche der beiden Schichten a und b, so kann die Schcht b deckend, vorzugsweise weiß, eingefärbt sein. Dazu dient üblicherweise ein in dieser Schicht gleichmäßig verteiltes Farbpigment.

Die Gesamtdicke der Dekorfolie und das Dickenverhältnis der Schichten a und b richten sich nach der Erfordernissen des Anwendungsfalles. Wird die Folie nur wegen der optischen Wirkung des Dekors und des Glanzes oder der sonstigen Oberflächenstruktur angewendet, so kann sie so dünn sein, wie es das Herstellungsverfahren erlaubt, beispielsweise 20 bis 100 $\mu$m. Wenn dagegen aus Grinden der optischen Brillanz oder zum Schutz des Dekors gegen schwerere mechanische Beschädigungen (z.B. bei Sportgeräten) eine erhebliche Dicke der Schicht a erwünscht ist, kann diese bis zu 2 mm dick sein. Die Schicht b kann auch in diesem Fall so dünn wie technisch möglich ausgeführt werden, z.B. 10 bis 50 $\mu$m. Eine sehr dünne Schicht b ist in der Regel sowohl zum Erreichen der Verklebbarkeit als auch als Farbhintergrund für das Dekor ausreichend. Ein bevorzugter Typ der erfindungsgemäßen Dekorfolien enthält eine Schicht a von 0,5 bis 1 mm Dicke und eine Schicht b unter 0,5 mm Dicke.

Wenn der Anwendungsfall mehr als die kleinstmöglich herstellbare Dicke erfordert, aber die guten Eigenschaften der Polycarbonat-Kunststoffe nur an der Oberfläche benötigt werden, so ist es kostengünstiger, die Schicht a dünnstmöglich und die Schicht b aus dem billigeren ABS-Kunststoff entsprechend dicker auszuführen.

Herstellung der Dekorfolie

Die erfindungsgemäße Dekorfolie kann nach verschiedenen Verfahren hergestellt werden. Sehr wirtschaftlich ist das Verfahren der Coextrusion, bei dem die für die Schichten a und b vorgesehenen Kunststoffe aus je einem Extruder im thermoplastischen Zustand in eine Zweistoff-Extrusionsdüse eingespeist und in derselben zu einer Schicht vereinigt werden. Die aus dem Düsenschlitz austretende Verbundbahn wird in einem unmittelbar nachgeschalteten Glättwerk kalandriert. In diesem Falle werden klare, allenfalls transparent eingefärbte Formmassen eingesetzt.

Danach, vorzugsweise unmittelbar nach dem Austritt aus dem Glättwerk, wird auf die freiliegende Unterseite der Schicht b das Dekor im Transferdruckverfahren aufgebracht, wobei zu beachten ist, daß es nach dem Aufkaschieren spiegelverkehrt erscheint.
Beim Transferdruckverfahren wird der Farbstoff von einem meist mehrfarbig mit sublimierbaren Farbstoffen bedruckten Träger, in der Regel Papier, durch Anwendung von Hitze auf den Kunststoff ubertragen. Ein dafür geeignetes Verfahren ist in der DE-A 32 44 355 beschrieben. Der Farbstoff dringt je nach der angewandten Temperatur und der Dauer ihrer Einwirkung etwa 10 bis 50 $\mu$m tief in den Kunststoff ein.

Die Schichten a und b können auch jede für sich in der gewünschten Dicke als selbständige Folien hergestellt und durch kontinuierliches Verpressen zwischen beheizten Walzen in der Wärme zu der Verbundfolie vereinigt werden. Ein unlösbarer Verbund der beiden Folien wird erreicht, wenn die aufeinandergelegten Folien gemeinsam mit einer Geschwindigkeit von etwa 2 bis 10 m/min unter einem Liniendruck von 10 bis 500 N/cm durch einen Walzenspalt geführt werden. Die Walzentemperatur muß so hoch sein, daß wenigstens die ABS-Folie den thermoelastischen Zustandsbereich erreicht. Walzentemperaturen von 150 bis 300 Grad Celsius sind in der Regel geeignet.

Die erhaltene Verbundfolie kann wie die coextrudierte Folie nach dem Transferdruckverfahren bedruckt werden. Stattdessen können auch vor der Vereinigung der beiden Folien die Rückseite der Polycarbonat-Folie oder eine der Oberflächen der ABS-Folie nach dem Transferdruckverfahren bedruckt und danach die Folien verbunden werden. Vorzugsweise wird der Transferdruck auf eine der Oberflächen aufgebracht, die miteinander verbunden werden. In diesem Falle kann die ABS-Folie deckend eingefärbt sein.

Anwendung der Dekorfolie

Die erfindungsgemäße Dekorfolie kann auf beliebige feste Substrate aufkaschiert werden, z.B. solche aus Metall, wie Aluminium oder Stahl, aus Kunststoff, Faser-Kunststoff-Laminaten, Sperrholz, Spanplatten, Schaumstoffen, Beton, keramischen Werkstoffen usw. Klebstoffe für alle genannten Werkstoffe sind bekannt. Sie werden so gewählt, daß sie auch an der ABS-Kunststoffschicht haften, was meistens der Fall ist. Zu den geeigneten Klebstoffen zählen Epoxidharzkleber, wie Araldite der Ciba-Geigy AG. Wenn sich das Dekor an der Unterseite der Schicht b befindet, kann es vorteilhaft sein, zur Bildung eines farbigen oder weißen Dekorgrundes in die Klebstoffschicht ein Pigment einzubringen. Bildet das Substrat selbst einen geeigneten Hintergrund, kann auch ein transparenter Kleber verwendet werden. Die Dicke der Klebstoffschicht und die Bedingungen der Aushärtung richten sich nach den bekannten Eigenschaften des jeweiligen Klebers.

**Patentansprüche**

1. Verklebbare Dekorfolie, bestehend aus
    a) einer klaren Schicht aus Polycarbonat-Kunststoff oder einem Gemisch aus Polycarbonat-Kunststoff und einem anderen, damit verträglichen Kunststoff oder einem schlagzähen Polymethylmethacrylate (PMMA)-Kunststoff und

b) einer mit der Schicht a haftend verbundenen Schicht aus Acrylnitril-Butadien-Styrol-(ABS)-Kunststoff,

wobei die mit dem ABS-Kunststoff verbundene Seite der Schicht a oder eine Oberfläche der Schicht b ein Dekor aus einem eindiffundierten Farbstoff trägt.

2. Verklebbare Dekorfolie nach Anspruch 1, dadurch gekennzeichnet, daß die Schicht a wenigstens 30 Gew.-% Polycarbonat-Kunststoff enthält.

3. Verklebbare Dekorfolie nach den Anspruchen 1 oder 2, dadurch gekennzeichnet, daß die Schicht a eine hochglänzende Oberfläche hat.

4. Verklebbare Dekorfolie nach den Ansprüchen 1 bis 3, dadurch gekennzeichnet, daß die Schicht a eine Dicke von 0,5 bis 1 mm und die Schicht b eine Dicke unter 0,5 mm haben.

5. Verklebbare Dekorfolie nach den Ansprüchen 1 bis 4, dadurch gekennzeichnet, daß die Schicht b deckend eingefärbt ist und wenigstens eine der beiden haftend verbundenen Oberflächen der Schichten a bzw. b ein Dekor aus einem eindiffundierten Farbstoff trägt.

6. Verfahren zur Herstellung einer verklebbaren Dekorfolie entsprechend den Ansprüchen 1 bis 5, dadurch gekennzeichnet, daß durch Coextrusion eine Verbundfolie aus den Schichten a und b erzeugt und die freiliegende Seite der Schicht b im Transferdruckverfahren mit einem farbigen Dekor versehen wird.

7. Verfahren zur Herstellung einer verklebbaren Dekorfolie entsprechend den Ansprüchen 1 bis 5, dadurch gekennzeichnet, daß eine Folie A, entsprechend der Schicht a gemäß Anspruch 1, auf der mit der Schicht b zu verbindenden Seite im Transferdruckverfahren mit einem farbigen Dekor versehen und durch kontinuierliches Verpressen zwischen beheizten Walzen mit einer Folie B, entsprechend der Schicht b gemäß Anspruch 1, haftend verbunden wird.

8. Verfahren zur Herstellung einer verklebbaren Dekorfolie entsprechend den Ansprüchen 1 bis 5, dadurch gekennzeichnet, daß eine Folie B, entsprechend der Schicht b im Anspruch 1, im Transferdruckverfahren mit einem farbigen Dekor versehen und durch kontinuierliches Verpressen zwischen beheizten Walzen mit einer Folie A, entsprechend der Schicht a gemäß Anspruch 1, haftend verbunden wird.

9. Verfahren nach Anspruch 8, dadurch gekennzeichnet, daß die mit dem farbigen Dekor versehene Seite der Folie B mit der Folie A verbunden wird.

10. Verfahren nach den Anspruchen 7 bis 9, dadurch gekennzeichnet, daß als Folie B eine deckend eingefärbte Folie eingesetzt wird.

## Claims

1. Bondable decorative film consisting of
   a) a clear layer of polycarbonate plastics or a mixture of polycarbonate plastics and one other plastics compatible therewith or an impact-resistant polymethylmethacrylate (PMMA) plastics and
   b) a layer of acrylonitrile-butadiene-styrene (ABS) plastics which is adheringly bonded to the layer a,
   the side of layer a bonded to the ABS plastics material or a surface of the layer b carrying a design of a diffused dyestuff.

2. Bondable decorative film according to claim 1, characterised in that the layer a contains at least 30% by weight of polycarbonate plastics.

3. Bondable decorative film according to either claim 1 or 2, characterised in that the layer a has a glossy surface.

4. Bondable decorative film according to claims 1 to 3, characterised in that the layer a has a thickness of 0.5 to 1 mm and the layer b has a thickness of less than 0.5 mm.

5. Bondable decorative film according to claims 1 to 4, characterised in that the layer b is opaquely coloured and in that at least one of the two adheringly bonded surfaces of layers a or b carries a design of a diffused dyestuff.

6. Process for preparing a bondable decorative film, according to claims 1 to 5, characterised in that a composite film consisting of layers a and b is produced by coextrusion and the exposed side of layer b is provided with a coloured design, by means of a transfer printing method.

7. Process for preparing a bondable decorative film, according to claims 1 to 5, characterised in that a film A, which corresponds to layer a according to claim 1, is provided, on the side to be bonded to layer b, with a coloured design, using the transfer printing method, and is adheringly bonded, as a result of continuous pressing between heated rollers, to a film B which corresponds to layer b according to claim 1.

8. Process for preparing a bondable decorative film, according to claims 1 to 5, characterised in that a film B, which corresponds to layer b in claim 1, is provided with a coloured design, using the transfer printing method, and is adheringly bonded, as a result of continuous pressing between heated rollers, to a film A which corresponds to a layer a according to claim 1.

9. Process according to claim 8, characterised in that the side of the film B, provided with the coloured design, is bonded to the film A.

10. Process according to claims 7 to 9, characterised in that an opaquely coloured film is used as film B.

**Revendications**

1. Feuille-décor collable, se composant
   a) d'une couche transparente en plastique polycarbonate ou en un mélange de plastique polycarbonate et d'un autre plastique compatible avec celui-ci ou d'un plastique polyméthacrylate de méthyle (PMMA) résistant au choc
   et
   b) d'une couche de plastique acrylonitrile/butadiène/styrène (ABS) unie par adhérence à la couche a),
   la face de la couche a) qui est unie au plastique ABS ou une surface de la couche b) portant un décor en un colorant diffusé à l'intérieur.

2. Feuille-décor collable selon la revendication 1, caractérisée en ce que la couche a) contient au moins 30% en poids de plastique polycarbonate.

3. Feuille-décor collable selon la revendication 1 ou 2, caractérisée en ce que la couche a) a une surface brillante.

4. Feuille-décor collable selon l'une quelconque des revendications 1 à 3, caractérisée en ce que la couche a) a une épaisseur de 0,5 à 1 mm et la couche b) une épaisseur inférieure à 0,5 mm.

5. Feuille-décor collable selon l'une quelconque des revendications 1 à 4, caractérisée en ce que la couche b) présente une coloration couvrante et en ce qu'au moins l'une des deux surfaces unies par adhérence des couches a) ou b) porte un décor en un colorant diffusé à l'intérieur.

6. Procédé de fabrication d'une feuille-décor collable selon l'une quelconque des revendications 1 à 5, caractérisé en ce qu'une feuille composite formée des couches a) et b) est produite par co-extrusion, et la face dégagée de la couche b) est garnie d'un décor coloré par le procédé d'impression par transfert.

7. Procédé de fabrication d'une feuille-décor collable selon l'une quelconque des revendications 1 à 5, caractérisé en ce qu'une feuille A), correspondant à la couche a) selon la revendication 1, est garnie d'un décor coloré, par le procédé d'impression par transfert, sur sa face destinée à être unie à la couche b), et elle est unie par adhérence à une feuille B), correspondant à la couche b) selon la revendication 1, par pressage continu entre des cylindres chauffés.

8. Procédé de fabrication d'une feuille-décor collable selon l'une quelconque des revendications 1 à 5, caractérisé en ce qu'une feuille B), correspondant à la couche b) dans la revendication 1, est garnie d'un décor coloré par le procédé d'impression par transfert, et elle est unie par adhérence à une feuille A), correspondant à la couche a) selon la revendication 1, par pressage continu entre des cylindres chauffés.

9. Procédé selon la revendication 8, caractérisé en ce que c'est la face de la feuille B) garnie du décor coloré qui est unie à la feuille A).

10. Procédé selon l'une quelconque des revendications 7 à 9, caractérisé en ce qu'on utilise, comme feuille B), une feuille qui présente une coloration couvrante.